# EUROPÄISCHE PATENTSCHRIFT

(11) **EP 0 693 331 B1**
(45) Veröffentlichungstag und Bekanntmachung des Hinweises auf die Patenterteilung: **10.06.1998**
(21) Anmeldenummer: 94113100.5
(22) Anmeldetag: 23.08.1994
(51) Int. Cl.: B21D 26/02

(54) **Vorrichtung zum Anschliessen einer Druckmittelleitung an ein Rohr**
Device for coupling a conduit-pipe to a tube
Dispositif de connection d'une conduite à un tube

(30) Priorität: 23.07.1994 DE 4426209
(43) Veröffentlichungstag der Anmeldung: 24.01.1996
(73) Patentinhaber: Anton Bauer Werkzeug- und Maschinenbau GmbH & Co. KG, 66763 Dillingen (DE)
(72) Erfinder: Bauer, Anton, D-66773 Schwalbach (DE)
(74) Vertreter: Bernhardt, Winfrid, Dr.-Ing.

(56) Entgegenhaltungen:
- DE-C- 710 912
- FR-A- 2 415 496
- US-A- 2 375 763
- US-A- 5 233 854

## Beschreibung

Die Erfindung betrifft eine Vorrichtung zum Anschließen einer Druckmittelleitung an ein Rohr, insbesondere an einer Umformungseinrichtung für das Rohr, mit einem in das Rohrende einzuschiebenden Bolzen, der eine mit der Druckmittelleitung verbundene Längsbohrung aufweist, sowie einer auf das Rohrende aufzuschiebenden, axial geteilten Muffe mit einem konischen Außenumfang, die durch Eindrücken in eine Ringscheibe mit einem Hohlkonus gleicher Steigung verengbar und an den Umfang des Rohres anpreßbar ist, sowie mit einem Stellantrieb für die Verschiebung des Bolzens und der Muffe.

Eine Vorrichtung mit diesen Merkmalen ist aus der US-A-2,375,763 bekannt. In dieser bekannten Vorrichtung ist der die Längsbohrung aufweisende Bolzen mit einem durch den Stellantrieb in Richtung zu dem Rohrende verschiebbaren Trägerkopf verbunden. Auf der den Bolzen umgebenden längs geteilten Muffe sitzt verschiebbar ein den Hohlkonus aufweisendes Teil auf, das über einen Hebelmechanismus unter Andrücken von gegen das Rohr anliegenden Muffenteilen auf die Muffe aufschiebbar ist.

Der Erfindung liegt die Aufgabe zugrunde, eine solche Vorrichtung zu schaffen, die möglichst weitgehend selbsttätig ist und nötigenfalls Bewegungen des Rohrendes folgen kann.

Gemäß der Erfindung wird dieser Zweck erfüllt mit den Konstruktionsmaßnahmen gemäß Anspruch 1.
Vorteilhafte Ausgestaltungen sind Gegenstände der Unteransprüche.

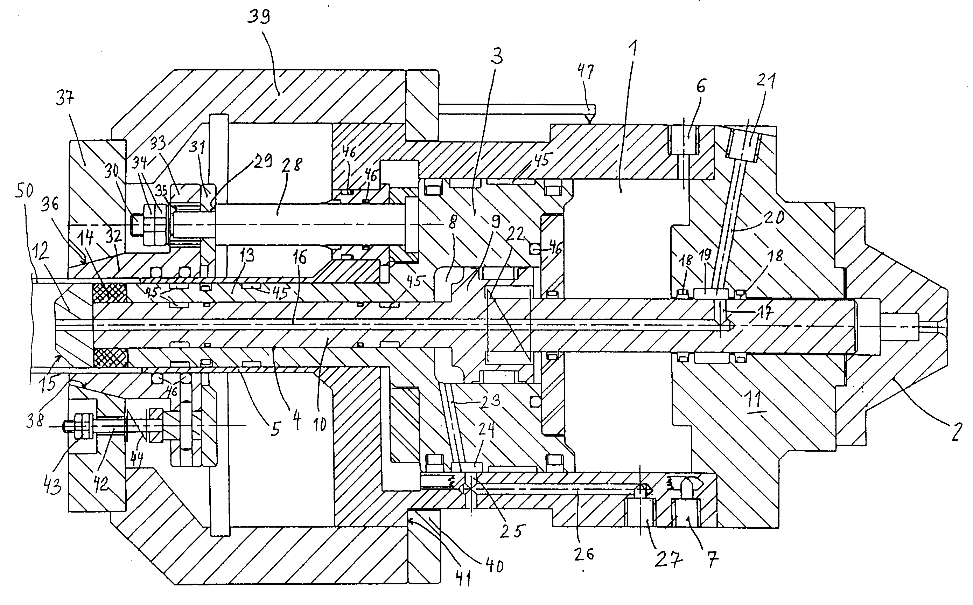

Die Zeichnung gibt ein Ausführungsbeispiel der Erfindung wieder.

Sie zeigt eine Vorrichtung zum Anschließen einer Druckmittelleitung an ein Rohr in axialem Schnitt.

Grundkörper der Vorrichtung ist ein hydraulischer Zylinder 1, der mit einem konischen Rückwandteil 2 zentriert in eine Aufnahme einer Vorschubeinrichtung einsetzbar ist.

Nach der anderen Seite ragt als Kolbenstange des in dem Zylinder 1 angeordneten Kolbens 3 ein Bolzen 4 aus dem Zylinder 1 heraus. Er ist auf dem größeren Teil seiner Länge umschlossen mit einem von der Stirnwand des Zylinders 1 ausgehenden Mantelrohr 5.
Der in Richtung des Vorschubes des Bolzens 4 wirksame Druckmittelein- und -auslaß des Zylinders 1 ist mit 6 bezeichnet, der in der Gegenrichtung wirksame Druckmittelein- und -auslaß mit 7.

Der Kolben 3 ist wiederum als ein hydraulischer Zylinder 8 gestaltet. Dieser weist an seinem Kolben 9 eine zweiseitige Kolbenstange in Form einer Stange 8 auf, die sich nach hinten bis in die dortige Stirnwand 11 des Zylinders 1 erstreckt und nach vorne bis zum Ende des Bolzens 4, wo sie einen mit einem Zentrierkonus 15 versehenen Kopf 12 des Bolzens 4 trägt und zwischen diesem und dem rückwärtigen Teil 13 des Bolzens 4 ein elastischer Dichtring 14 angeordnet ist.
Eine durch die Stange 10 und den Kopf 12 sich erstreckende und an der Stirnseite des Kopfes 12 ausmündende Längsbohrung 16 ist innerhalb der Stirnwand 11 durch eine Radialbohrung 17, einen beiderseits mittels Dichtringen 18 abgedichteten Ringkanal 19 und eine Bohrung 20 mit einem Druckmittelanschluß 21 verbunden.
Der in dem Kolben 3 ausgebildete Zylinder 8 ist gegen die Kraft einer Feder 22 beaufschlagbar über eine Bohrung 23 in dem Kolben 3, die von einem am Umfang des Kolbens 3 herausgearbeiteten Ringkanal 24 ausgeht, in dem in der Endstellung des Kolbens 3 eine durch die Wandung des Zylinders 1 geführte Bohrung 25 mündet. Diese ist im vorliegenden Falle aus Platzgründen durch eine weitere, axiale Bohrung 26 mit einem an anderer Stelle angeordneten Druckmittelanschluß 27 verbunden.

Der Kolben 3 weist parallel zu dem Bolzen 4 drei weitere Kolbenstangen 28 auf. Sie setzen sich hinter einem Absatz 29 mit verkleinertem Durchmesser fort und gehen dann in einen Gewindebolzen 30 über.
Nachdem sie durch einen an dem Absatz 29 anliegenden Ring 31 miteinander verbunden sind, tragen sie eine dreigeteilte Muffe 32 in der Weise, daß jedes der drei Muffenteile mit einem Flansch 33 auf eine Kolbenstange 28 aufgesteckt und mittels Muttern 34 befestigt ist, wobei jedoch eine in dem Flansch sitzende, die Kolbenstange 28 unmittelbar umfassende Zwischenhülse 35 eine beschränkte radiale Beweglichkeit ermöglicht.
Die Muffe 32 hat auf ihrem vorderen Abschnitt einen konischen Außenumfang 36.

Eine Ringscheibe 37 mit einem komplementären Hohlkonus 38 ist in einen Topf 39 integriert, der über den Zylinder 1 greift und in der gezeichneten Stellung mit einem Innenbund 40 gegen einen an dem Zylinder 1 ausgebildeten Absatz 41 abgestützt ist. Der Topf 39 ist auf dem Zylinder 1 verschiebbar.

Die Ringscheibe 37 ist mit der Muffe 32 verbunden mit einem axialen Spiel, das ein Eindrücken der Muffe 32 in den Hohlkonus 38 der Ringscheibe 37 erlaubt:
Die Ringscheibe 37 wird verschiebbar durchsetzt von drei Bolzen 42, die zwischen den Kolbenstangen 28 von den Flanschen 33 der Muffenteile ausgehen und vor der Ringscheibe 37 einen aus Mutter und Kontermutter bestehenden Kopf 43 aufweisen und hinter der Ringscheibe 37 eine gegen diese drückende Druckfeder 44 tragen.

Generell sind im übrigen Führungsringe mit 45 und Dichtringe mit 47 bezeichnet.

Die beschriebene Vorrichtung faßt ein Rohr 50.
Das vordere Ende des Bolzens 4 ist bis zum stirnseitigen Anstoß des Mantelrohres 5 an dem Rohr 50 in dieses eingeschoben, d.h. auch noch mit einem kurzen Abschnitt des rückwärtigen Teils 13. Durch Beaufschlagung des Kolbens 9 ist der elastische Dichtring 14 zwischen dem Kopf 12 und dem Ende des rückwärtigen Teils 13 des Bolzens 4 zusammengedrückt und damit von innen dicht an die Rohrwandung gepreßt. Durch Beaufschlagung des Kolbens 3 auf seiner Rückseite wird über die Kolbenstangen 28, den Ring 31 und ihre Flansche 33 die Muffe 32 mit ihrem konischen Außenumfang 36 in den Hohlkonus 38 der Ringscheibe 37 gedrückt, die durch das Anliegen des Topfes 39 mit seinem Innenbund 40 an dem Absatz 41 gehalten ist. Die drei Teile der Muffe werden dadurch radial zusammengedrückt und damit von außen auf das Rohr 50 gepreßt.

Damit ist eine Verbindung von solcher Festigkeit geschaffen - in gleicher Weise am anderen Ende des Rohres 50 -, daß über die Leitungen 21,20,19,17 und 16 ein hydraulisches Druckmittel in das Rohr 50 eingeführt und unter einen Druck von bis zu 500 bar, je nach den Verhältnissen bis zu 1000 bar und mehr gesetzt werden kann.

Damit kann beispielsweise das Rohr 50 in einer Biegemaschine verformt werden, ohne daß sein Querschnitt an den Biegungen abflacht. Die Vorrichtung kann dabei Bewegungen des Rohrendes folgen; an den Druckmittelein- und -auslässen 6 und 7 und den Druckmittelanschlüssen 21 und 25 sind Kupplungsteile flexibler Leitungen eingeschraubt.

Um die Verbindung zwischen der beschriebenen Vorrichtung und dem Rohr 50 zu lösen, wird zunächst der Zylinder 8 drucklos gemacht. Die in dem Zylinderraum auf der anderen Seite des Kolbens 9 angeordnete Feder 22 verschiebt den Kolben 9 und damit über die Stange 10 den Kopf 12 nach vorne, so daß der elastische Dichtring 14 entspannt und nicht mehr an die Rohrwandung gepreßt wird.

Nun kann der Kolben 3 auf seiner Vorderseite beaufschlagt und zurückgeschoben werden. Dadurch wird der Bolzen 4 aus dem, währenddessen durch das Mantelrohr 5 zurückgehaltenen, Rohr 50 herausgezogen und die Muffe 32 nach Lockerung von dem Rohr 50 abgezogen. In der Endstellung fluchten die vorderen Enden des Bolzens 4, der Muffe 32 und des Mantelrohres 5 im wesentlichen miteinander, d.h. das Rohr 50 ist freigegeben.
Die erwähnte Lockerung der Muffe 32 vollzieht sich von selbst in einem ersten kleinen Abschnitt der Bewegung. Sobald die Köpfe 43 der Bolzen 42, die vorher einen kleinen Abstand von ihr hatten, die Ringscheibe 37 berühren, wird der Topf 39 in die Bewegung mitgenommen und gleichfalls nach hinten verschoben. Die von dem Rohr 50 abfallende Vorrichtung wird dann beispielsweise durch eine Aufhängung gehalten.

Zum Ansetzen der Vorrichtung an das nächste Rohr wird der Kolben durch Beaufschlagung über den Druckmittelein- und -auslaß 6 nach vorne geschoben, bis eine Kontakteinrichtung 47 kurz vor der Endstellung die Druckmittelzufuhr abstellt und damit die Bewegung beendet. Der Topf 39 mit der Ringscheibe 37 kann dann bereits die gezeichnete Endstellung haben, kann aber auch noch etwas davor liegen. Die Muffe 32 ist jedoch gegenüber der Ringscheibe 37 so weit zurückgezogen, wie es die Stellung der Köpfe 43 auf den Bolzen 42 erlaubt; die Druckfedern 44 drücken die Ringscheibe 37 an die Köpfe 43.
Der Zentrierkonus 15 ragt in dieser Stellung vollständig über die Muffe 32 vor und zentriert daher die Vorrichtung genau auf dem Rohrende, bevor die Muffe 32 es erreicht. Nach Anstoß des Mantelrohres 5 an dem Rohr 50 wird wieder über den Druckmittelein- und -auslaß 6 Druckmittel in den Zylinder 1 eingegeben. Die Muffe 32 wird nun in den Hohlkonus 38 hineingedrückt und auf dem Rohr 50 festgeklemmt. Durch Druckmitteleinführung über den Druckmittelanschluß 21 wird der Kolben 7 verschoben und der Dichtring 14 von innen an die Rohrwandung gepreßt.

## Patentansprüche

1. Vorrichtung zum Anschließen einer Druckmittelleitung (21) an ein Rohr (50), insbesondere an einer Umformungseinrichtung für das Rohr, mit einem in das Rohrende (50) einzuschiebenden Bolzen (4), der eine mit der Druckmittelleitung verbundene (17-21) Längsbohrung (16) aufweist, sowie einer auf das Rohrende (50) aufzuschiebenden, axial geteilten Muffe (32) mit einem konischen Außenumfang (36), die durch Eindrücken in eine Ringscheibe (37) mit einem Hohlkonus (38) gleicher Steigung verengbar und an den Umfang des Rohres (50) anpreßbar ist, sowie mit einem Stellantrieb (2) für die Verschiebung des Bolzens (4) und der Muffe (32),
dadurch gekennzeichnet,
daß der Bolzen (4) mit einem Kopf (12) an einer im rückwärtigen Teil (13) des Bolzens (4) verschiebbar geführten Stange (10) und einem elastischen Dichtring (14) zwischen dem Kopf (12) und dem rückwärtigen Teil (13) versehen ist, wobei die Längsbohrung (16) im Kopf (12) und der Stange (10) gebildet ist und am Kopf (12) ausmündet,
daß ein in Fortsetzung des Platzes für die Rohrwandung (50) den Bolzen (4) umschließendes Mantelrohr (5) vorgesehen ist, gegenüber dem der Bolzen (4) und die Muffe (32) so weit verschiebbar sind, bis die vorderen Enden des Bolzens (4), der Muffe (32) und des Mantelrohres (5) im wesentlichen miteinander fluchten, und
daß Stellantriebe (8,9;1,3) für die weiteren genannten Verschiebungen vorgesehen sind.

2. Vorrichtung nach Anspruch 1,
dadurch gekennzeichnet,
daß ein das Mantelrohr (5) aufweisender, mittels einer Vorschubeinrichtung bis zum stirnseitigen Anstoß des Mantelrohres (5) an dem Rohr vorschiebbarer Grundkörper als ein hydraulischer Zylinder (1) gestaltet ist, dessen Kolben (3) den Bolzen (4) als axiale Kolbenstange aufweist.

3. Vorrichtung nach Anspruch 2,
dadurch gekennzeichnet,
daß der Kolben (3) wiederum als ein hydraulischer Zylinder (8) gestaltet ist, dessen Kolben (9) die den Kopf (12) tragende Stange (10) als Kolbenstange aufweist.

4. Vorrichtung nach Anspruch 2,
dadurch gekennzeichnet,
daß der in dem ersteren Kolben (3) ausgebildete letztere Zylinder (8), vorzugsweise gegen die Kraft einer Feder (22), beaufschlagbar ist über eine Bohrung (23) in dem ersteren Kolben (3), die von einem am Umfang des ersteren Kolbens (3) ausgebildeten Ringkanal (24) ausgeht, in die in der vorderen Endstellung des ersteren Kolbens (3) eine durch die erstere Zylinderwand geführte Bohrung (25) mündet.

5. Vorrichtung nach einem der Ansprüche 2 bis 4,
dadurch gekennzeichnet,
daß der erstere Kolben (3) parallel zu dem Bolzen (4) mindestens zwei, vorzugsweise drei, weitere Kolbenstangen (28) aufweist, an denen über einen Ring (31) die axial geteilte Muffe (32) angebracht ist.

6. Vorrichtung nach Anspruch 5,
dadurch gekennzeichnet,
daß die, vorzugsweise drei, Teile der Muffe (32) jeweils über eine in einem Flansch (33) angeordnete elastische Zwischenhülse (35) an den Enden der weiteren Kolbenstangen (28) angeschraubt (30,34) sind unter Zwischenlegung des Ringes (31) vor einem Absatz (29) der Kolbenstangen (28).

7. Vorrichtung nach einem der Ansprüche 2 bis 6,
dadurch gekennzeichnet,
daß die den Hohlkonus (38) aufweisende Ringscheibe (37) in einen Topf (39) oder Käfig integriert ist, der über den ersteren Zylinder (1) greift und gegen einen an dem ersteren Zylinder (1) ausgebildeten Absatz (41) abgestützt ist.

8. Vorrichtung nach Anspruch 7,
dadurch gekennzeichnet,
daß der Topf (39) oder Käfig auf dem ersteren Zylinder (1) verschiebbar ist und die Ringscheibe (37) mit der Muffe (32) verbunden ist mit einem axialen Spiel, das das Eindrücken der Muffe (32) in den Hohlkonus (38) der Ringscheibe (37) erlaubt.

9. Vorrichtung nach den Ansprüchen 6 und 8,
dadurch gekennzeichnet,
daß die Ringscheibe (37) verschiebbar durchsetzt wird von Bolzen (42), die von den Flanschen (33) der Muffenteile ausgehen und vor der Ringscheibe (37) einen, vorzugsweise aus Mutter und Kontermutter bestehenden, Kopf (43) aufweisen und hinter der Ringscheibe (37) eine gegen diese drückende Druckfeder (44) tragen.

## Claims

1. Device for connecting a pressure-medium conduit (21) to a pipe (50), in particular at a forming apparatus for the pipe, having a plug (4) which can be inserted into the end of the tube (50) and has a longitudinal bore (16) connected (17-21) to the pressure-medium conduit, and having an axially divided cuff (32) with a conical outside circumference (36) which can be pushed onto the end of the pipe (50), can be narrowed by pressing it into an annular disc (37) with a hollow cone (38) of the same pitch, and can be pressed against the circumference of the pipe (50), and having an adjusting drive (2) for the displacement of the plug (4) and the cuff (32), characterized in that the plug (4) is provided with a head (12) on a rod (10), guided displaceably in the rear part (13) of the plug (4), and an elastic sealing ring (14) between the head (12) and the rear part (13), the longitudinal bore (16) being formed in the head (12) and the rod (10) and opening out at the head (12), in that a tubular sleeve (5) is provided, which surrounds the plug (4) in continuation of the space for the tube wall (50), in relation to which sleeve the plug (4) and the cuff (32) can be displaced until the front ends of the plug (4), the cuff (32) and the tubular sleeve (5) are essentially flush with one another, and in that adjusting drives (8, 9; 1, 3) are provided for the further said displacements.

2. Device according to Claim 1, characterized in that a basic body, which has the tubular sleeve (5) and can be pushed forwards by means of an advancing apparatus until the end face of the tubular sleeve (5) strikes against the tube, is designed as a hydraulic cylinder (1), whose piston (3) has the plug(4) as an axial piston rod.

3. Device according to Claim 2, characterized in that the piston (3) is, in turn, designed as a hydraulic cylinder (8), whose piston (9) has as piston rod the rod (10) bearing the head (12).

4. Device according to Claim 2, characterized in that the latter cylinder (8), formed in the former piston (3), can be pressurized, preferably counter to the force of a spring (22), by means of a bore (23) in the former piston (3), which bore starts from an annular channel (24) which is formed on the circumference of the former piston (3) and into which, in the front end position of the former piston (3), a bore (25) opens, which passes through the former cylinder wall.

5. Device according to one of Claims 2 to 4, characterized in that the former piston (3) has at least two, preferably three, further piston rods (28) parallel to the plug (4), to which piston rods the axially divided cuff (32) is attached by means of a ring (31).

6. Device according to Claim 5, characterized in that the, preferably three, parts of the cuff (32) are screwed (30, 34) to the ends of the further piston rods (28) in each case with interposition of an elastic bush (35), arranged in a flange (33), and with interposition of the ring (31) in front of a shoulder (29) on the piston rods (28).

7. Device according to one of Claims 2 to 6, characterized in that the annular disc (37) having the hollow cone (38) is integrated in a pot (39) or cage which engages over the former cylinder (1) and is supported against a shoulder (41) formed on the former cylinder (1).

8. Device according to Claim 7, characterized in that the pot (39) or cage can be displaced on the former cylinder (1), and the annular disc (37) is connected to the cuff (32) with axial play which permits the cuff (32) to be pressed into the hollow cone (38) of the annular disc (37).

9. Device according to Claims 6 and 8, characterized in that pins (42) pass displaceably through the annular disc (37), which pins extend from the flanges (33) of the cuff parts and, in front of the annular disc (37), have a head (43), preferably comprising a nut and check nut, and, behind the annular disc (37) bear a compression spring (44) which presses against the said annular disc.

## Revendications

1. Dispositif de connexion d'une conduite d'agent sous pression (21) à un tuyau (50), en particulier sur un dispositif de façonnage du tuyau, présentant un axe (4) qui est à insérér dans l'extrémité du tuyau (50), ledit axe présentant un trou longitudinal (16) relié (17-21) au conduit d'agent sous pression, ainsi qu'un manchon (32) qui est divisé axialement et glissant sur l'extrémité du tuyau (50), ledit manchon présentant un périmètre extérieur (36) conique, qui peut être rétréci en le poussant dans un disque annulaire (37) présentant un cône creux (38) de même pente et comprimé contre le périmètre du tuyau, ainsi qu'un dispositif d'entraînement de réglage (2) pour le déplacement de l'axe (4) et du manchon (32),
caractérisé en ce que l'axe (4) est pourvu d'une tête (12) sur une tige (10) pouvant être déplacée en étant guidée dans la partie postérieure (13) de l'axe (4) et d'un joint annulaire (14) élastique entre la tête (12) et la partie postérieure (13), le trou longitudinal (16) étant formé dans la tête (12) et la tige (10) et débouchant au niveau de la tête (12),
en ce qu'on a prévu un tuyau enveloppe (5) entourant l'axe (4) et étant la continuité de la paroi du tuyau (50), par rapport auquel l'axe (4) et le manchon (32) peuvent être déplacés jusqu'à ce que les extrémités antérieures de l'axe (4), du manchon (32) et du tuyau enveloppe (5) sont alignées les unes par rapport aux autres
et en ce qu'on a prévu des dispositifs d'entrâinement de réglage (8, 9; 1, 3) pour les autres déplacements mentionnés.

2. Dispositif selon la revendication 1, caractérisé en ce que une pièce de base, présentant le tuyau enveloppe (5), pouvant être déplacée à l'aide d'un dispositif de déplacement jusqu'à ce la face du tuyau enveloppe (5) bute contre le tuyau, est réalisée sous forme d'un cylindre hydraulique (1), dont le piston (3) présente l'axe (4) en tant que tige de piston axiale.

3. Dispositif selon la revendication 2, caractérisé en ce que le piston (3) est à nouveau réalisé sous forme d'un cylindre hydraulique (8), dont le piston (9) présente la tige (10) portant la tête (12) comme tige de piston.

4. Dispositif selon la revendication 2, caractérisé en ce que le dernier cylindre (8) formé dans le premier piston (3) peut être alimenté, de préférence contre la force d'un ressort (22), via un trou (23) dans le premier piston (3), qui part d'un chenal annulaire (24) formé à la périphérie du premier piston (3), dans lequel débouche, dans la position d'extrémité antérieure du premier piston (3), un trou (25) passant à travers la première paroi de cylindre.

5. Dispositif selon une quelconque des revendications 2 à 4, caractérisé en ce que le premier piston (3) présente, parallèlement à l'axe (4), au moins deux, de préférence trois, autres tiges de piston (28) sur lesquelles est disposé, via un anneau (31), le manchon (32) axialement divisé.

6. Dispositif selon la revendication 5, caractérisé en ce que les, de préférence trois, parties du manchon (32) sont chaque fois (30, 34) vissées, via une douille (35) intermédiaire élastique disposée dans une bride (33), aux extrémités des autres tiges de piston (28), en intercalant l'anneau (31) devant un épaulement (29) des tiges de piston (28).

7. Dispositif selon une quelconque des revendications 2 à 6, caractérisé en ce que le disque annulaire (37) présentant le cône creux (38) est intégré dans une pointe (39) ou un logement qui entoure le premier cylindre (1) et qui est appuyé contre un épaulement (41) réalisé dans le premier cylindre (1).

8. Dispositif selon la revendication 7, caractérisé en ce que la pointe (39) ou le logement peut être déplacé sur le premier cylindre (1) et en ce que le disque annulaire (37) est raccordé au manchon (32) avec un jeu axial qui permet l'introduction du manchon (32) dans le cône creux (38) du disque annulaire (37).

9. Dispositif selon une quelconque des revendications 6 à 8, caractérisé en ce que le disque annulaire (37) est traversé de manière mobile par d' axes (42), qui partent des brides (33) des parties de manchon et qui présentent, devant le disque annulaire (37), une tête (43) qui est de préférence constituée par un écrou et un contre-écrou et qui portent derrière le disque annulaire (37) un ressort à compression (44) qui pousse contre ledit disque.
